# EUROPEAN PATENT APPLICATION

(11) **EP 4 617 300 A1**
(43) Date of publication of application: **17.09.2025**
(21) Application number: 23888640.2
(22) Date of filing: 06.11.2023
(51) Int. Cl.: C08G 85/00, C08G 64/02, C08G 64/20

(54) **METHOD FOR PRODUCING THERMOPLASTIC RESIN**

(30) Priority: 09.11.2022 JP 2022179696
(71) Applicant: MITSUBISHI GAS CHEMICAL COMPANY, INC., Chiyoda-ku Tokyo 100-8324 (JP)
(72) Inventor: GOTO TAKAGI Yuri, Kamisu-shi, Ibaraki 314-0102 (JP); KOSHIISHI Eiji, Kamisu-shi, Ibaraki 314-0102 (JP); SHIMIZU Hidetaka, Tokyo 100-8324 (JP); ISHIZUKA Hirohito, Kamisu-shi, Ibaraki 314-0102 (JP); SHIRATAKE Munenori, Kamisu-shi, Ibaraki 314-0102 (JP); YOSHIDA Takuma, Kamisu-shi, Ibaraki 314-0102 (JP); HOSOKAWA Tomoya, Kamisu-shi, Ibaraki 314-0102 (JP)
(74) Representative: Hoffmann Eitle
(86) International application number: PCT/JP2023/039821
(87) International publication number: WO 2024/101292

(57) **Abstract**

The present invention can provide a method for producing a thermoplastic resin including a structural unit derived from 9,9-bis(4-(2-hydroxyethoxy)phenyl)fluorene (BPEF) represented by the depicted structural formula, the method being characterized by using the BPEF as a raw material, the BPEF containing 0.8 ppm or less of sulphate ions (SO₄²⁻), 10 ppm or less of sodium ions (Na⁺), and 0.01 ppm or more of calcium ions (Ca²⁺).

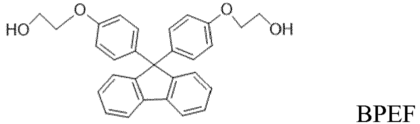

## Description

### TECHNICAL FIELD

The present invention relates to a method for producing a thermoplastic resin including a structural unit derived from 9,9-bis(4-(2-hydroxyethoxy)phenyl)fluorene (hereinafter sometimes referred to as "BPEF").

### BACKGROUND ART

BPEF as a resin raw material is produced by various production methods as shown in, for example, Patent Document 1 and Patent Document 2. However, high- quality BPEF is not industrially produced stably at a large scale and the reactivity may vary unexpectedly depending on the lot or manufacturer.

The cause of such variation has not been elucidated, and there has been a demand for the development of a novel production method that can control the reactivity of thermoplastic resins made from BPEF.

In addition to impurities derived from raw materials of the production, various impurities may be mixed into BPEF during the production or distribution process after the production. For example, Patent Document 3 and Patent Document 4 describe the S content and the Na content. Patent Document 5 describes the sulfur content. Further, Patent Document 6 describes that color phase is improved by adjusting the concentration of the sulfur element derived from -SO₃H groups and -SO₃R groups in BPEF to a certain value or less.

### PRIOR ART DOCUMENTS

### PATENT DOCUMENTS

Patent Document 1: Japanese Laid-Open Patent Publication No. H7-165657
Patent Document 2: Japanese Laid-Open Patent Publication No. 2007-23016
Patent Document 3: Japanese Laid-Open Patent Publication No. 2007-197368
Patent Document 4: Japanese Laid-Open Patent Publication No. 2011-074048
Patent Document 5: Japanese Laid-Open Patent Publication No. 2018-168124
Patent Document 6: Japanese Laid-Open Patent Publication No. 2008-111047

### SUMMARY OF THE INVENTION

### PROBLEMS TO BE SOLVED BY THE INVENTION

The present invention addresses the problem of providing a novel production method in which BPEF is used as a raw material and the reactivity of a thermoplastic resin can be controlled.

### MEANS FOR SOLVING THE PROBLEMS

The present inventors diligently made researches in order to solve the above-described problems and found out that among impurities contained in BPEF, those having polymerization catalytic ability or depolymerization catalytic ability for thermoplastic resins are present. Specifically, it was found that such polymerization catalytic ability or depolymerization catalytic ability is affected by the presence of not only specific amounts of sulphate ions (SO₄²⁻) and sodium ions (Na⁺), but also a specific amount of calcium ions (Ca²⁺), and that it is important to use BPEF containing specific amounts of these ion species in order to stably control the reactivity of thermoplastic resins, and thus the present invention was achieved.

Specifically, the present invention is as follows:
<1> A method for producing a thermoplastic resin comprising a structural unit derived from 9,9-bis(4-(2-hydroxyethoxy)phenyl)fluorene (BPEF) represented by a structural formula below, the method being characterized by using the BPEF as a raw material, wherein
   the BPEF contains 0.8 ppm or less of sulphate ions (SO₄²⁻),
   the BPEF contains 10 ppm or less of sodium ions (Na⁺), and
   the BPEF contains 0.01 ppm or more of calcium ions (Ca²⁺): 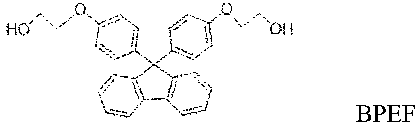
<2> The method according to item <1> in which the BPEF is used as a raw material, wherein
   the BPEF contains 0.01 to 0.8 ppm of sulphate ions (SO₄²⁻),
   the BPEF contains 0.01 to 10 ppm of sodium ions (Na⁺), and
   the BPEF contains 0.01 to 0.5 ppm of calcium ions (Ca²⁺).
<3> The method according to item <1> or <2> in which the BPEF is used as a raw material, wherein
   the BPEF contains 0.01 to 0.15 ppm of sulphate ions (SO₄²⁻),
   the BPEF contains 0.01 to 0.10 ppm of sodium ions (Na⁺), and
   the BPEF contains 0.01 to 0.20 ppm of calcium ions (Ca²⁺).
<4> The method according to any one of items <1> to <3>, wherein the concentrations of sulphate ions (SO₄²⁻), sodium ions (Na⁺), and calcium ions (Ca²⁺) contained in the BPEF are measured prior to polymerization of the thermoplastic resin using the BPEF.
<5> The method according to any one of items <1> to <4>, wherein a polymerization catalyst is additionally added during polymerization of the thermoplastic resin.
<6> The method according to item <5>, wherein the polymerization catalyst is an alkali metal compound.
<7> The method according to any one of items <1> to <6>, wherein the thermoplastic resin further comprises at least one structural unit selected from the group consisting of general formulae (1) to (4): 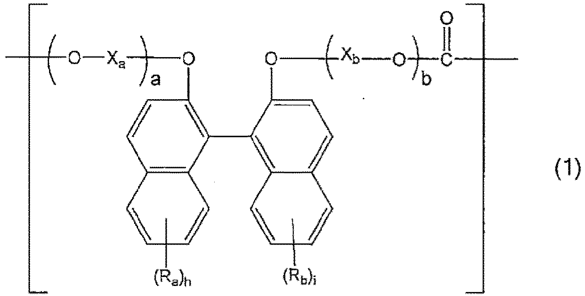 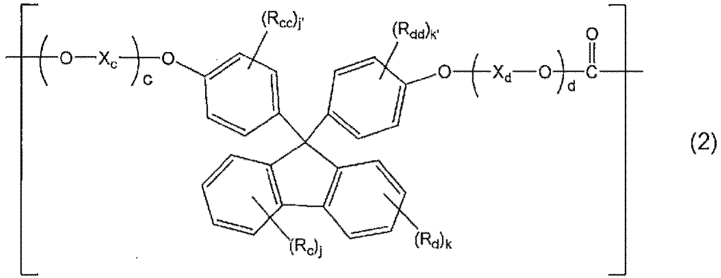 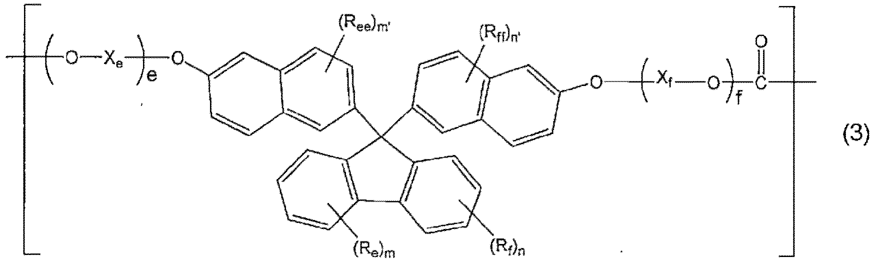 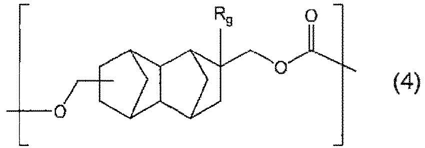 wherein in formulae:
   Xₐ, X_{b}, X_{c}, X_{d}, Xₑ, and X_{f} each independently represent an alkylene group having 1 to 4 carbon atoms;
   Rₐ, R_{b}, R_{c}, R_{cc}, R_{d}, R_{dd}, Rₑ, Rₑₑ, R_{f}, and R_{ff} are each independently selected from a halogen atom; an alkyl group having 1 to 20 carbon atoms; an alkoxy group having 1 to 20 carbon atoms; a cycloalkyl group having 5 to 20 carbon atoms; a cycloalkoxy group having 5 to 20 carbon atoms; an aryl group having 6 to 20 carbon atoms; a heteroaryl group having 3 to 20 carbon atoms which contains at least one heterocyclic atom selected from O, N and S; an aryloxy group having 6 to 20 carbon atoms; and -C≡C-Rᵢ;
   Rᵢ represents an aryl group having 6 to 20 carbon atoms, or a heteroaryl group having 3 to 20 carbon atoms which contains at least one heterocyclic atom selected from O, N and S;
   a, b, c, d, e, and f each independently represent an integer of 0 to 10;
   h, i, j, j', k, k', m, m', n, and n' each independently represent an integer of 0 to 4; and
   each R_{g} independently represents a hydrogen atom or an alkyl group having 1 to 3 carbon atoms.
<8> The method according to any one of items <1> to <7>, wherein the thermoplastic resin is a polycarbonate resin.

### ADVANTAGEOUS EFFECT OF THE INVENTION

According to the present invention, it is possible to provide a novel production method in which BPEF is used as a raw material and the reactivity of a thermoplastic resin can be controlled.

### EMBODIMENTS FOR CARRYING OUT THE INVENTION

Hereinafter, the present invention will be described in detail by way of embodiments, examples, etc., but the present invention is not limited to embodiments, examples, etc. described below and can be arbitrarily changed and then practiced within a range not departing from the gist of the present invention.

One embodiment of the present invention is a method for producing a thermoplastic resin including a structural unit derived from 9,9-bis(4-(2-hydroxyethoxy)phenyl)fluorene (BPEF) represented by a structural formula below, the method being characterized by using the BPEF as a raw material, wherein the BPEF contains 0.8 ppm or less of sulphate ions (SO₄²⁻), the BPEF contains 10 ppm or less of sodium ions (Na⁺), and the BPEF contains 0.01 ppm or more of calcium ions (Ca²⁺). When the content of sulphate ions (SO₄²⁻) in the BPEF is more than 0.8 ppm, the reactivity is deteriorated. Meanwhile, when the content of calcium ions (Ca²⁺) in the BPEF is less than 0.01 ppm, the reactivity is deteriorated.

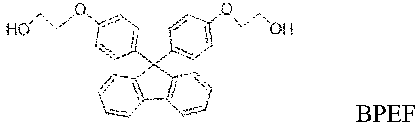

Preferably, the BPEF that is used as a raw material in the present invention contains 0.01 to 0.8 ppm of sulphate ions (SO₄²⁻), 0.01 to 10 ppm of sodium ions (Na⁺), and 0.01 to 0.5 ppm of calcium ions (Ca²⁺).

More preferably, the BPEF that is used as a raw material in the present invention contains 0.01 to 0.15 ppm of sulphate ions (SO₄²⁻), 0.01 to 0.10 ppm of sodium ions (Na⁺), and 0.01 to 0.20 ppm of calcium ions (Ca²⁺).

In a preferred embodiment of the present invention, it is preferred to measure the concentrations of sulphate ions (SO₄²⁻), sodium ions (Na⁺), and calcium ions (Ca²⁺) contained in the BPEF prior to polymerization of the thermoplastic resin using the BPEF. In this regard, the concentrations of sulphate ions (SO₄²⁻), sodium ions (Na⁺), and calcium ions (Ca²⁺) contained in the BPEF can be measured according to the method described in the Examples which will be described later.

In a preferred embodiment of the present invention, an aspect in which a polymerization catalyst is additionally added during polymerization of the thermoplastic resin is preferred. As described in paragraph [0025] below, the amount of the catalyst added at the start of the reaction is preferably 10⁻⁹ to 10⁻⁴ mol, and more preferably 10⁻⁷ to 10⁻⁵ mol relative to 1 mol of the total of a dihydroxy compound as a raw material. Meanwhile, the amount of the catalyst to be additionally added is preferably 10⁻¹⁰ to 10⁻⁴ mol, and more preferably 10⁻⁸ to 10⁻⁵ mol relative to 1 mol of the total of a dihydroxy compound as a raw material, or alternatively, it is preferred that the amount of the catalyst to be additionally added is preferably 0.01 to 3 times, more preferably 0.1 to 2 times, and particularly preferably 0.3 to 1 times the amount of the catalyst added at the start of the reaction.

The polymerization catalyst to be additionally added is preferably an alkali metal compound. Specific examples thereof include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium phenylboron, sodium benzoate, potassium benzoate, cesium benzoate, lithium benzoate, disodium hydrogen phosphate, dipotassium hydrogen phosphate, dilithium hydrogen phosphate, disodium phenyl phosphate, a disodium salt, dipotassium salt, dicesium salt or dilithium salt of bisphenol A, and a sodium salt, potassium salt, cesium salt or lithium salt of phenol. The polymerization catalyst to be additionally added is preferably the same type as the polymerization catalyst added at the start of the reaction, and sodium hydrogen carbonate is particularly preferably used.

In another preferred embodiment of the present invention, an aspect in which the thermoplastic resin further has at least one structural unit selected from the group consisting of general formulae (1) to (4) below is preferred.

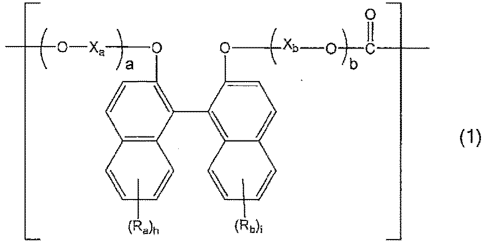

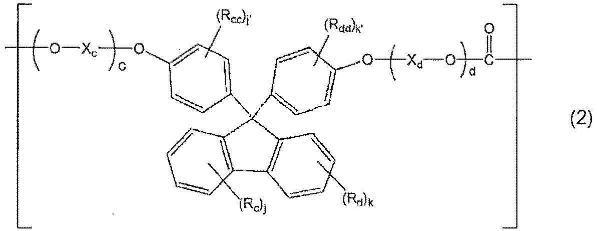

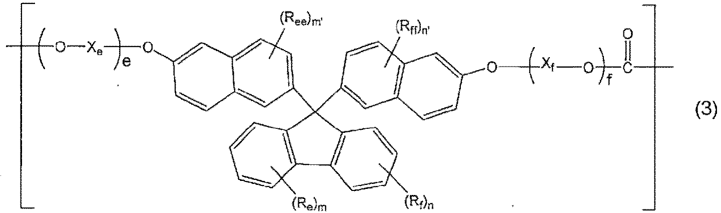

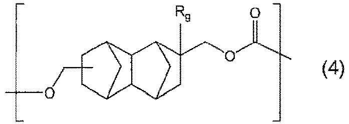

In formulae above:
Xₐ, X_{b}, X_{c}, X_{d}, Xₑ, and X_{f} each independently represent an alkylene group having 1 to 4 carbon atoms;
Rₐ, R_{b}, R_{c}, R_{cc}, R_{d}, R_{dd}, Rₑ, Rₑₑ, R_{f}, and R_{ff} are each independently selected from a halogen atom; an alkyl group having 1 to 20 carbon atoms; an alkoxy group having 1 to 20 carbon atoms; a cycloalkyl group having 5 to 20 carbon atoms; a cycloalkoxy group having 5 to 20 carbon atoms; an aryl group having 6 to 20 carbon atoms; a heteroaryl group having 3 to 20 carbon atoms which contains at least one heterocyclic atom selected from O, N and S; an aryloxy group having 6 to 20 carbon atoms; and -C≡C-Rᵢ;
Rᵢ represents an aryl group having 6 to 20 carbon atoms, or a heteroaryl group having 3 to 20 carbon atoms which contains at least one heterocyclic atom selected from O, N and S;
a, b, c, d, e, and f each independently represent an integer of 0 to 10;
h, i, j, j', k, k', m, m', n, and n' each independently represent an integer of 0 to 4; and
each R_{g} independently represents a hydrogen atom or an alkyl group having 1 to 3 carbon atoms.

In a preferred embodiment of the present invention, the thermoplastic resin is preferably a polycarbonate resin or a polyester carbonate resin. Hereinafter, the case where the thermoplastic resin of the present invention is a polycarbonate resin will be described in detail.

In the present invention, the glass transition temperature of the polycarbonate resin is preferably 95°C to 165°C, and more preferably 105°C to 165°C. When the glass transition temperature is lower than 95°C, it is not preferred because the heat resistance is deteriorated and the use environment is limited. Further, when the glass transition temperature is higher than 165°C, it is not preferred because the flowability is deteriorated and the forming conditions are restricted. Furthermore, when the molecular weight is set to be low in order to ensure the flowability, it is not preferred because the resin becomes brittle. The total light transmittance is preferably 87% or higher, and more preferably 89% or higher. Further, the YI value (yellowness index) of a disk test piece having a thickness of 3 mm is preferably 3.0 or less, and more preferably 2.0 or less.

Polycarbonate resins that satisfy the above-described physical properties are particularly suitable as molding materials for optical applications such as optical films, optical disks, optical prisms, and optical lenses.

In the present invention, the polystyrene-equivalent weight average molecular weight of the polycarbonate resin is preferably 20,000 to 200,000, and more preferably 35,000 to 100,000. When the polystyrene-equivalent weight average molecular weight is less than 20,000, it is not preferred because the impact resistance is reduced, and when it is more than 200,000, it is not preferred because the flowability is deteriorated and the forming conditions are restricted.

Hereinafter, the method for producing a polycarbonate resin of the present invention will be described. A publicly-known melt polycondensation method, in which a diol and a carbonic acid diester are reacted in the presence of a basic compound catalyst or a transesterification catalyst or a mixed catalyst made of both of them, is suitably used.

Examples of the carbonic acid diester to be used in the present invention include diphenyl carbonate, ditolyl carbonate, bis(chlorophenyl) carbonate, m-cresyl carbonate, dinaphthyl carbonate, dimethyl carbonate, diethyl carbonate, dibutyl carbonate, and dicyclohexyl carbonate. Among them, diphenyl carbonate is particularly preferred. Further, the content of chlorine in diphenyl carbonate, which may cause coloring, is preferably 20 ppm or less, and more preferably 10 ppm or less. Diphenyl carbonate is used in an amount of preferably 0.97 to 1.2 mol, and particularly preferably 0.99 to 1.10 mol relative to 1 mol of a dihydroxy compound as a raw material.

In the production method of the present invention, publicly-known basic compounds, transesterification catalysts, etc. are used as polymerization catalysts. Examples of such compounds particularly include alkali metal and/or alkaline earth compounds, nitrogen-containing compounds, and metal compounds of tin, etc.

Organic acids, inorganic salts, oxides, hydroxides, hydrides or alkoxides of alkali metal and alkaline earth compounds, etc., quaternary ammonium hydroxides and salts thereof, amines, etc. are preferably used, and these compounds may be used solely or in combination.

Specific examples of the alkali metal compound include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium phenylboron, sodium benzoate, potassium benzoate, cesium benzoate, lithium benzoate, disodium hydrogen phosphate, dipotassium hydrogen phosphate, dilithium hydrogen phosphate, disodium phenyl phosphate, a disodium salt, dipotassium salt, dicesium salt or dilithium salt of bisphenol A, and a sodium salt, potassium salt, cesium salt or lithium salt of phenol. Sodium hydrogen carbonate is particularly preferably used.

Specific examples of the alkaline earth metal compound include magnesium hydroxide, calcium hydroxide, strontium hydroxide, barium hydroxide, magnesium hydrogen carbonate, calcium hydrogen carbonate, strontium hydrogen carbonate, barium hydrogen carbonate, magnesium acetate, calcium acetate, strontium acetate, barium acetate, magnesium stearate, calcium stearate, calcium benzoate, and magnesium phenyl phosphate.

Specific examples of the nitrogen-containing compound include: ammonium hydroxides having an alkyl group, aryl group, araryl group or the like such as tetramethylammonium hydroxide, tetraethylammonium hydroxide, tetrapropylammonium hydroxide, tetrabutylammonium hydroxide, and trimethylbenzylammonium hydroxide; tertiary amines such as triethylamine, dimethylbenzylamine, and triphenylamine; secondary amines such as diethylamine and dibutylamine; primary amines such as propylamine and butylamine; imidazoles such as 2-methylimidazole and 2-phenylimidazole; and basic salts such as ammonia, tetramethylammonium borohydride, tetrabutylammonium tetraphenylborate, and tetraphenylammonium tetraphenylborate.

Further, as the alkali metal compound, an alkali metal salt of an ate complex of an element belonging to Group 14 of the periodic table or an alkali salt of an oxoacid of an element belonging to Group 14 of the periodic table can be used. In this regard, the element belonging to Group 14 of the periodic table refers to silicon, germanium or tin.

Specifically, examples of the alkali metal salt of the ate complex of the element belonging to Group 14 of the periodic table include a germanium compound such as NaGe(OMe)₅ and NaGe(OEt)₃ and a tin compound such as NaSn(OMe)₃ and NaSn(Ome)₂(OEt). Further, examples of the alkali salt of the oxoacid of the element belonging to Group 14 of the periodic table include monosodium orthosilicate, disodium monostannate, and monosodium germanate.

These polymerization catalysts are used in an amount of preferably 10⁻⁹ to 10⁻⁴ mol, and more preferably 10⁻⁷ to 10⁻⁵ mol relative to 1 mol of a dihydroxy compound as a raw material.

In the melt polycondensation method related to the present invention, using the aforementioned raw materials and polymerization catalyst, melt polycondensation is carried out while removing a by-product by means of a transesterification reaction under heating conditions and under ordinary pressure or reduced pressure. The reaction is generally performed with two or more stages.

Specifically, the first stage reaction is performed at 120 to 220°C, preferably 160 to 200°C, for 0.1 to 5 hours, preferably 0.5 to 3 hours, under a pressure of ordinary pressure to 200 Torr. Next, the temperature is gradually increased to the final temperature of 230 to 260°C over 1 to 3 hours, while the pressure is gradually reduced to the final pressure of 1 Torr or less, and the reaction is continued. Finally, a polycondensation reaction is performed at 230 to 260°C under a reduced pressure of 1 Torr or less, and when the viscosity reaches a predetermined value, the pressure is restored with nitrogen, and the reaction is terminated. The reaction time under a pressure of 1 Torr or less is 0.1 to 2 hours, and the total reaction time is 1 to 6 hours, and usually 2 to 5 hours.

Such a reaction may be either a continuous type or a batch type. The reaction apparatus to be used for performing the above-described reaction may be a vertical apparatus equipped with an anchor type stirring blade, maxblend stirring blade, helicalribbon type stirring blade or the like, or a horizontal apparatus equipped with a paddle blade, lattice blade, spectacle-shaped blade or the like, or an extruder-type apparatus equipped with a screw. Further, a reaction apparatus in which these apparatuses are appropriately combined in consideration of the viscosity of a polymerized product is suitably used.

In the present invention, after the polymerization reaction is completed, in order to maintain thermal stability and hydrolytic stability of the polycarbonate resin, the polymerization catalyst can be removed or deactivated. In general, a method for deactivating a polymerization catalyst by means of addition of a publicly-known acidic substance is suitably carried out. As the acidic substance, specifically, aromatic sulfonic acids such as p-toluenesulfonic acid; aromatic sulfonic acid esters such as butyl p-toluenesulfonate and hexyl p-toluenesulfonate; aromatic sulfonates such as dodecylbenzenesulfonic acid tetrabutylphosphonium salt; organic halides such as stearic acid chloride, benzoyl chloride and p-toluenesulfonic acid chloride; alkyl sulfates such as dimethyl sulfate; organic halides such as benzyl chloride; etc. are preferably used.

These deactivating agents are used in an amount of preferably 0.01 to 50 times, and more preferably 0.3 to 20 times the molar quantity of the total of the catalyst added. Alternatively, it may be necessary not to add the deactivating agent because when the deactivating agent is melt-kneaded, the heat history of the resin is increased, which may cause denaturation of a portion of the resin.

After the catalyst is deactivated, a process of devolatilizing and removing a low boiling point compound in the polymer under a pressure of 0.1 to 1 mmHg and at a temperature of 200 to 350°C may be carried out. In this process, a horizontal apparatus equipped with a stirring blade having excellent surface renewal ability such as a paddle blade, a lattice blade and a spectacle-shaped blade, or a thin film evaporator is suitably used.

Further, in the present invention, in addition to the above-described heat stabilizer and hydrolysis stabilizer, an antioxidant, a pigment, a dye, a reinforcing agent, a filler, an ultraviolet absorber, a lubricant, a mold release agent, a crystal nucleating agent, a plasticizer, a flowability improving agent, an antistatic agent, an antimicrobial agent, etc. are suitably added.

Each of these additives can be mixed into the polycarbonate resin by a conventionally known method. A method in which these additives are mixed into the molten resin after completion of polymerization directly in a vertical or horizontal tank-type reactor or extruder and the mixture is cooled and then pelletized is suitably used. Alternatively, a method in which the molten resin after completion of polymerization is cooled and pelletized, then each component is dispersed and mixed using a high-speed mixer represented by a turnbull mixer, a Henschel mixer, a ribbon blender, a super mixer, etc., and then the mixture is melt-kneaded using an extruder, a Banbury mixer, a roll or the like is suitably selected.

### EXAMPLES

Hereinafter, the present invention will be described in detail by way of working examples and comparative examples, but the present invention is not limited to the working examples.

### 1) BPEF

As BPEF, a commercially available BPEF was used.

### 2) Concentration of Sulphate Ions (SO₄²⁻) in BPEF

After matrix elimination was performed using a concentration column, a sample was analyzed by anion chromatography, and the concentration (ppm) of sulphate ions (SO₄²⁻) in BPEF was calculated. The analysis conditions are as described below.
Apparatus: Ion Chromatography 930 Compact manufactured by Metrohm
Detector: Electrical conductivity detector
Sample preparation: A sample was prepared by dissolving BPEF in a mixed solution of 40% (v/v) of ultrapure water and 60% (v/v) of acetone.
Eluent: A mixed solution of 3.6 mM sodium carbonate and 5% (v/v) of acetone was used.

### 3) Concentration of Sodium Ions (Na⁺) and Concentration of Calcium Ions (Ca²⁺) in BPEF

After BPEF was subjected to ashing, a sample was analyzed by ICP emission spectrometry, and the concentration (ppm) of sodium ions (Na⁺) and the concentration (ppm) of calcium ions (Ca²⁺) in the above-described BPEF were calculated. The analysis conditions are as described below.
Ashing conditions: BPEF was heated at 800°C for 6 hours and adjusted with dilute hydrochloric acid.
Apparatus: iCAP 6300 Duo manufactured by Thermo Fisher Scientific

### 4) Reactivity

### <Reactivity Test 1>

As a sample, in addition to 95.2 g (0.215 mol) of 9,9-bis(4-(2-hydroxyethoxy)phenyl)fluorene (BPEF), 48.0 g (0.224 mol) of diphenyl carbonate (DPC), and 1.44×10⁻⁴ g of sodium hydrogen carbonate (1.72×10⁻⁶ mol, i.e., 8 µmol per 1 mol of BPEF, added as a 0.1% by mass aqueous solution) were put into a flask equipped with a cooling tube.

Under nitrogen atmosphere, it was heated to 200°C under a pressure of 760 Torr, and after stirring for 1 hour, the pressure was reduced to 170 Torr, thereby producing a thermoplastic resin. After that, the presence or absence of distilling off of phenol as a by-product was visually observed within 5 minutes.
Case where distilling off of phenol was observed: o
Case where distilling off of phenol was not observed: ×

### <Reactivity Test 2>

Observations were made in a manner similar to that in Reactivity Test 1, except that 2.17×10⁻⁴ g of sodium hydrogen carbonate (2.58×10⁻⁶ mol, i.e., 12 µmol per 1 mol of BPEF, added as a 0.1% by mass aqueous solution) was used.
Case where distilling off of phenol was observed: o
Case where distilling off of phenol was not observed: ×

### 5) Depolymerization

As a sample, in addition to 43.85 g (0.10 mol) of BPEF, 218.50 g (1.02 mol) of DPC, and 1.44×10⁻⁴ g of sodium hydrogen carbonate (1.72×10⁻⁶ mol, i.e., 8 µmol per 1 mol of BPEF, added as a 0.1% by mass aqueous solution) were put into a flask equipped with a stirrer capable of detecting stirring torque, a cooling tube, and a thermometer.

Under nitrogen atmosphere, it was heated to 200°C under a pressure of 760 Torr, and after stirring for 1 hour, the pressure was reduced to 170 Torr, while the temperature was increased to 240°C at a rate of 60°C/hr. After maintaining the reduced pressure of 170 Torr for 10 minutes, the pressure was reduced to 1 Torr or less over 1 hour, thereby producing a thermoplastic resin. After the pressure reached 1 Torr or less, the reaction was continued for another 30 minutes and the polymerization behavior, i.e., the change in stirring torque, was observed.

When the stirrer rotation speed was constant, as polymerization progressed, the viscosity of resin increased, and as a result, stirring torque increased, it became impossible to perform stirring, and it was required to reduce the stirrer rotation speed. Meanwhile, when depolymerization progressed, even though stirring torque increased, it became impossible to perform stirring, and the stirrer rotation speed was reduced as described above, even when the stirrer rotation speed was increased again, it did not become impossible to perform stirring. Accordingly, judgments were made as described below.
Case where stirring torque continues to increase or does not change: depolymerization is absent
Case where stirring torque naturally decreases during polymerization: depolymerization is present

### (Example 1)

Using a BPEF (BPEF-1) containing 0.11 ppm of sulphate ions (SO₄²⁻), 0.02 ppm of sodium ions (Na⁺), and 0.11 ppm of calcium ions (Ca²⁺), a thermoplastic resin was produced, and the reactivity and the presence or absence of depolymerization were judged. The results showed that Reactivity Test 1 was "○", Reactivity Test 2 was "○", and depolymerization was "absent".

### (Examples 2 to 6, Comparative Examples 1 to 3)

A thermoplastic resin was produced in a manner similar to that in Example 1, except that the type of BPEF was changed to that shown in Table 1, and Reactivity Test 1, Reactivity Test 2, and the presence or absence of depolymerization were judged. The results are shown in Table 1.

**Table 1**

| | Type of BPEF | SO₄²⁻ Concentration | Na⁺ Concentration | Ca²⁺ Concentration | Reactivity Test | | Depolymerization |
|---|---|---|---|---|---|---|---|
| | | [ppm] | [ppm] | [ppm] | 1 | 2 | Present/ Absent |
| Example 1 | BPEF-1 | 0.11 | 0.02 | 0.11 | ○ | ○ | Absent |
| Example 2 | BPEF-2 | 0.12 | 0.01 | 0.15 | ○ | ○ | Absent |
| Example 3 | BPEF-3 | 0.20 | 6.20 | 0.03 | ○ | ○ | Present |
| Example 4 | BPEF-4 | 0.24 | 1.40 | 0.25 | ○ | ○ | Present |
| Example 5 | BPEF-5 | 0.26 | 0.54 | 0.03 | × | ○ | Absent |
| Example 6 | BPEF-6 | 0.62 | 0.20 | 0.24 | × | ○ | Absent |
| Comparative Example 1 | BPEF-7 | 0.47 | 0.07 | N.D. | × | × | Absent |
| Comparative Example 2 | BPEF-8 | 0.90 | 0.01 | 0.15 | × | × | Absent |
| Comparative Example 3 | BPEF-9 | 1.38 | 0.06 | 0.38 | × | × | Absent |

### (Example 7)

As raw materials, 95.2 g (0.215 mol) of BPEF-5 that was used in Example 5, 48.0 g (0.224 mol) of diphenyl carbonate (DPC), and 1.44×10⁻⁴ g of sodium hydrogen carbonate (1.72×10⁻⁶ mol, i.e., 8 µmol per 1 mol of BPEF, added as a 0.1% by mass aqueous solution) were put into a flask equipped with a stirrer capable of detecting stirring torque, a cooling tube, and a thermometer.

Under nitrogen atmosphere, it was heated to 200°C under a pressure of 760 Torr, and after stirring for 1 hour, the pressure was reduced to 170 Torr. At that time, distilling off of phenol was not observed. Nitrogen was introduced, the reduced pressure was returned to ordinary pressure, and 0.73×10⁻⁴ g of sodium hydrogen carbonate was additionally added (0.86×10⁻⁶ mol, i.e., 4 µmol per 1 mol of BPEF, added as a 0.1% by mass aqueous solution). Subsequently, the pressure was reduced to 170 Torr, while the temperature was increased to 240°C at a rate of 60°C/hr. When the reduced pressure of 170 Torr was maintained for 10 minutes, distilling off of phenol was observed. After that, the pressure was reduced to 1 Torr or less over 1 hour. After the pressure reached 1 Torr or less, stirring was continued for 30 minutes. At that time, stirring torque did not decrease. Nitrogen was introduced, and a polycarbonate resin was successfully taken out from the flask and obtained. The productivity was improved by additionally adding sodium hydrogen carbonate as a polymerization catalyst.

## Claims

1. A method for producing a thermoplastic resin comprising a structural unit derived from 9,9-bis(4-(2-hydroxyethoxy)phenyl)fluorene (BPEF) represented by a structural formula below, which comprises using the following BPEF as a raw material, wherein
the BPEF contains 0.8 ppm or less of sulphate ions (SO₄²⁻),
the BPEF contains 10 ppm or less of sodium ions (Na⁺), and
the BPEF contains 0.01 ppm or more of calcium ions (Ca²⁺):

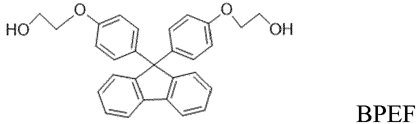

2. The method according to claim 1 in which the following BPEF is used as a raw material, wherein
the BPEF contains 0.01 to 0.8 ppm of sulphate ions (SO₄²⁻),
the BPEF contains 0.01 to 10 ppm of sodium ions (Na⁺), and
the BPEF contains 0.01 to 0.5 ppm of calcium ions (Ca²⁺).

3. The method according to claim 1 or 2 in which the following BPEF is used as a raw material, wherein
the BPEF contains 0.01 to 0.15 ppm of sulphate ions (SO₄²⁻),
the BPEF contains 0.01 to 0.10 ppm of sodium ions (Na⁺), and
the BPEF contains 0.01 to 0.20 ppm of calcium ions (Ca²⁺).

4. The method according to any one of claims 1 to 3, which comprises measuring concentrations of sulphate ions (SO₄²⁻), sodium ions (Na⁺), and calcium ions (Ca²⁺) contained in the BPEF prior to polymerization of the thermoplastic resin using the BPEF.

5. The method according to any one of claims 1 to 4, which comprises additionally adding a polymerization catalyst during polymerization of the thermoplastic resin.

6. The method according to claim 5, wherein the polymerization catalyst is an alkali metal compound.

7. The method according to any one of claims 1 to 6, wherein the thermoplastic resin further comprises at least one structural unit selected from the group consisting of general formulae (1) to (4): 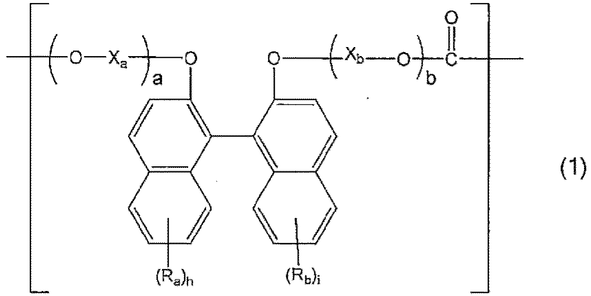 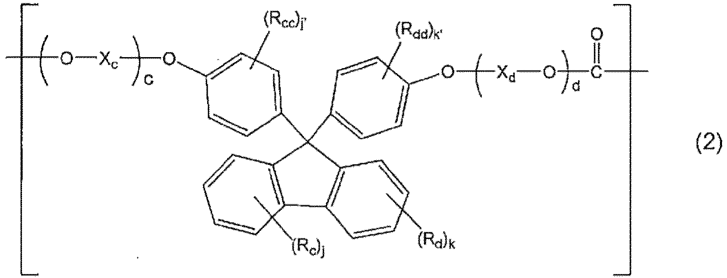 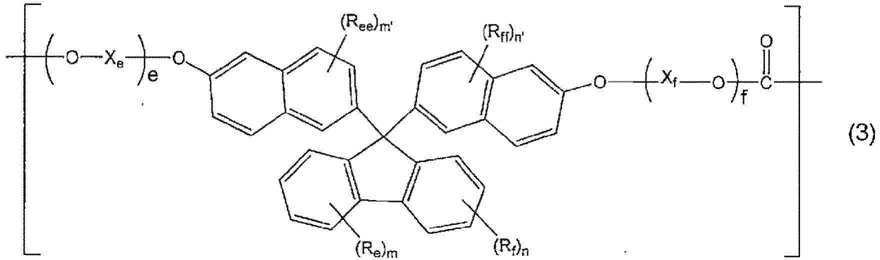 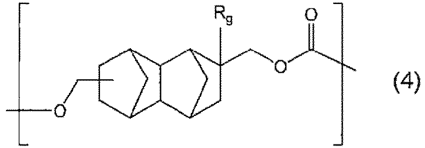 wherein in formulae:
Xₐ, X_{b}, X_{c}, X_{d}, Xₑ, and X_{f} each independently represent an alkylene group having 1 to 4 carbon atoms;
Rₐ, R_{b}, R_{c}, R_{cc}, R_{d}, R_{dd}, Rₑ, Rₑₑ, R_{f}, and R_{ff} are each independently selected from a halogen atom; an alkyl group having 1 to 20 carbon atoms; an alkoxy group having 1 to 20 carbon atoms; a cycloalkyl group having 5 to 20 carbon atoms; a cycloalkoxy group having 5 to 20 carbon atoms; an aryl group having 6 to 20 carbon atoms; a heteroaryl group having 3 to 20 carbon atoms which contains at least one heterocyclic atom selected from O, N and S; an aryloxy group having 6 to 20 carbon atoms; and -C≡C-Rᵢ;
Rᵢ represents an aryl group having 6 to 20 carbon atoms, or a heteroaryl group having 3 to 20 carbon atoms which contains at least one heterocyclic atom selected from O, N and S;
a, b, c, d, e, and f each independently represent an integer of 0 to 10;
h, i, j, j', k, k', m, m', n, and n' each independently represent an integer of 0 to 4; and
each R_{g} independently represents a hydrogen atom or an alkyl group having 1 to 3 carbon atoms.

8. The method according to any one of claims 1 to 7, wherein the thermoplastic resin is a polycarbonate resin.
